# EUROPÄISCHE PATENTSCHRIFT

(11) **EP 3 148 783 B1**
(45) Veröffentlichungstag und Bekanntmachung des Hinweises auf die Patenterteilung: **16.03.2022**
(21) Anmeldenummer: 15732515.0
(22) Anmeldetag: 22.05.2015
(51) Int. Cl.: B33Y 70/00, B33Y 30/00, B33Y 10/00, B29C 64/165, B29C 64/35

(54) **3D-UMKEHRDRUCKVERFAHREN**
3D REVERSE IMAGE PRINTING METHOD
PROCÉDÉ D'IMPRESSION 3D INVERSÉE

(30) Priorität: 26.05.2014 DE 102014007584
(43) Veröffentlichungstag der Anmeldung: 05.04.2017
(73) Patentinhaber: Voxeljet AG, 86316 Friedberg (DE)
(72) Erfinder: EDERER, Ingo, 82269 Geltendorf (DE); GÜNTHER, Daniel, 81371 München (DE); MÖGELE, Florian, 86459 Gessertshausen-Döpshofen (DE)
(74) Vertreter: Helbig, Christian
(86) Internationale Anmeldenummer: PCT/DE2015/000256
(87) Internationale Veröffentlichungsnummer: WO 2015/180703

(56) Entgegenhaltungen:
- EP-A1- 1 400 340
- WO-A1-01/38061
- WO-A1-2011/067319

## Beschreibung

Die Erfindung bezieht sich auf ein Verfahren und eine Vorrichtung zum Herstellen dreidimensionaler Modelle, wobei (ver-)bindendes Material schichtweise auf eine Bauplattform aufgebracht wird und selektiv Mittel aufgebracht werden, die ein Verbinden des aufgebrachten Materials verzögern oder ganz verhindern.

Ein Verfahren zur Herstellung dreidimensionaler Objekte aus Computerdaten wird beispielsweise in der EP 0 431 924 B1 beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Weiterhin sind 3D-Druckverfahren bekannt, bei denen selektiv Bereiche mit Mitteln bedruckt werden, um ein Versintern dieser Bereiche zu verhindern und in einem Sinterschritt dann die nicht bedruckten Bereiche fest miteinander verbunden werden, wodurch schließlich ein dreidimensionales Modell entsteht. Ein Beispiel hierfür ist die WO 01/38061 A1, die die Erfindung weder offenbart noch nahe legt.

Mit den bekannten 3D-Druckverfahren lassen sich verschiedene Partikelmaterialien wie z.B. natürliche biologische Rohstoffe, polymere Kunststoffe, Metalle, Keramiken und Sande verarbeiten.

Binder, die außerhalb von 3D-Druckanwendungen verwendet werden, sind hoch entwickelt. Als Beispiel kann Epoxidharz dienen. Dieses ergibt, wenn es beispielsweise mit Sand gemischt wird, einen steinartigen Werkstoff mit exzellenten Festigkeitseigenschaften.

Bisher ist es allerdings nicht oder nicht zufriedenstellend gelungen, an sich für den 3D-Druck vorteilhafte Materialsysteme mit sehr positiven Materialeigenschaften für diese Verfahren zugänglich zumachen. Damit gehen diese positiven Materialeigenschaften dem 3D-Druck verloren. Problematisch in diesem Zusammenhang ist die Prozesskomponente Druckkopf, der nur ein sehr eingeschränktes Spektrum an Materialien verarbeiten kann bzw. störanfällig beim Einsatz von bekannten und an sich vorteilhaften Materialsystemen ist.

Im Speziellen sind bekannte 3D-Druckverfahren mit den im Folgenden beschriebenen Nachteilen behaftet.

Pulverbasierte 3D-Druckverfahren sind beispielsweise in Schrift EP 0 431 924 B1 beschrieben. Hierbei wird ein Basismaterial als Pulver schichtweise aufgetragen. Naturgemäß ergeben sich zwischen den Partikeln Hohlräume. Diese schwächen die Festigkeit des gedruckten Bauteils.

Um die Festigkeit zu erhöhen, müssen die Hohlräume mit Material verfüllt werden, das durch den Druckkopf in flüssiger Form eingebracht wird. Dabei muss das eingedruckte Material ohne Trocknung erhärten. Da das Material über den Druckkopf dosiert wird, sind speziell bei den hier verwendeten Ink-Jet-Verfahren relativ niedrige Viskositäten im flüssigen Zustand erforderlich.

Betrachtet man beispielsweise das Materialsystem Beton, sieht man, dass an der Verwendungsstelle gemischter Beton von selbst und ohne Luftzufuhr verfestigt. Der Zementleim an sich ist aber nicht durch einen Tintenstrahldruckkopf verarbeitbar.

Ein zweites Beispiel können Reaktivharzsysteme sein. Diese Stoffe polymerisieren z.B. nach Mischung von zwei reaktiven Komponenten und härten dabei aus. Die Kettenlänge der Präpolymere ist dann üblicherweise sehr hoch, um bei der Reaktion den Schwund gering zu halten. Mit steigender Kettenlänge der Präpolymere sinkt die Gesundheitsgefahrdung, allerdings steigt auch die Viskosität. Deshalb sind solche Materialsysteme üblicherweise nur schlecht oder nicht verdruckbar.

Ein weiteres Merkmal solcher Produkte ist, dass sie vor dem Vergießen eine innige Durchmischung benötigen. Nur so ist die richtige Reaktion zwischen den funktionellen Gruppen im viskosen Medium gewährleistet. Eine solche Durchmischung müsste vor dem Dosiervorgang erfolgen und gefährdet damit den Druckkopf, da das Gemisch im Druckkopf härten kann, bevor es dosiert wird.

EP1400340A1 offenbart ein Verfahren zum Herstellen dreidimensionaler Modelle gemäß dem Oberbegriff des Anspruchs 1.

Ein Ziel der Erfindung ist es, die Verwendung von Standardmaterialien mit positiven Materialeigenschaften dem 3D-Druck zugänglich zu machen oder die Nachteile des Standes der Technik zu vermeiden oder zumindest zu vermindern.

Die erfindungsgemäße Lösung wird erzielt durch ein Verfahren nach Anspruch 1.

Die Erfindung besteht in einem Aspekt im Wesentlichen darin, die aus der Materialverarbeitung bekannten Misch- und Verdichtungsverfahren bei der Nutzung von Standardmaterialien durch Anwendung eines Verfahrens, bei dem das Negativ der benötigten Form schichtweise mit einem Reaktionsverzögerer behandelt wird, für den 3D-Druck nutzbar zu machen.

Der Vorteil des erfindungsgemäßen Verfahrens besteht darin, dass nunmehr Materialsysteme mit vorteilhaften Materialeigenschaften dem 3D-Druck zugänglich gemacht werden können. Somit wird es möglich, kostengünstig und zeitsparend 3D-Modelle mit sehr guten Formeigenschaften herzustellen.

Der Vorteil der Erfindung besteht auch darin, dass ein über die Zeit sich verfestigendes Baumaterial schichtweise aufgebracht wird und so ein 3D-Modell mit guten Materialeigenschaften hergestellt werden kann, ohne dass weitere Behandlungs- oder Verfestigungsschritte wie Sintern erforderlich sind.

Die vorliegende Erfindung bezieht sich auf ein 3D-Druckverfahren mit der Maßgabe, dass es keinen Sinterschritt beinhaltet und vorzugsweise andere als in der WO 01/38061 A1 beschriebene Materialsysteme oder Materialien verwendet. Der Unterschied der vorliegend beschriebenen Erfindung zu beispielsweise der WO 01/38061 A1 liegt insbesondere darin, dass sich das darin beschriebene Verfahren auf ein Sinterverfahren bezieht.

Im Folgenden werden einige Begriffe der Erfindung näher erläutert.

Im Sinne der Erfindung bezieht sich "3D-Druckverfahren" oder "Schichtaufbautechnik" auf alle aus dem Stand der Technik bekannten Verfahren, die den Aufbau von Bauteilen in dreidimensionalen Formen ermöglichen und mit geeigneten Verfahrenskomponenten und Vorrichtungen kompatibel sind. Insbesondere sind dies Pulver-basierte Verfahren, die mit geeigneten Materialsystemen durchgeführt werden können.

"Formkörper", "Modell" oder "Bauteil" im Sinne der Erfindung sind alle mittels des erfindungsgemäßen Verfahrens oder/und der erfindungsgemäßen Vorrichtung hergestellten dreidimensionalen Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikeimaterialien" können alle pulverförmigen Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes oder ein kohäsives schnittfestes Pulver. Ebenso können Dispersionen der eingesetzten Partikelmaterialien verwendet werden.

"Bauraum" ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

"Bauplattform" im Sinne der Erfindung ist eine Ebene, auf der das Modell aufgebaut wird. Diese kann beim Aufbau des Modells nach jedem Schichtauftrag verfahren werden. Die Bauplattform kann dabei im Wesentlichen horizontal oder in einem Winkel in der Vorrichtung angebracht sein.

Ein "Verfahren" der Bauplattform bedeutet dass die Bauplattform um eine Schichtdicke abgesenkt, gehoben oder horizontal verfahren wird, um die nächste Schicht aufzubringen.

"IR-Erwärmung" bedeutet in dieser Schrift eine Bestrahlung des Baufeldes mit einem Infrarot-Strahler. Dabei kann der Strahler statisch sein oder mit einer Verfahreinheit über das Baufeld bewegt werden.

"UV-Härtung" bezeichnet die Initiierung eines Materialsystems über Strahlung. Die Wellenlänge der Strahlung muss hierbei nicht zwingend im Bereich der UV-Strahlung liegen. Ebenso verwendbar sind wellenlängen der Klassen UV-Vis und Vis. Eine derartige Strahlung kann als Aktivierungsschritt eingesetzt werden.

"Baumaterial" im Sinne der Erfindung sind alle Materialien oder Materialgemische, die mit einer Vorrichtung im Sinne der Erfindung aufgetragen werden können. Dies können Pulver oder partikelförmige Materialien sein. Vorzugsweise handelt es sich um Zwei-Komponenten-Gemische, bei denen es erst durch ein Zusammenmischen zum Starten einer Verfestigungsreaktion kommt. Das Baumaterial kann auch als Dispersion vorliegen. Materialien oder Baumaterialien oder ein Materialsystem im Sinn der Erfindung kann bestehen aus Beton oder Mörtel, einem Gemisch aus einem Füller und einem Reaktivharzsystem, einem Gemisch aus einem Gießereiformstoff und einem in der Gießerei üblichen Reaktivharzsystem, einem Gemisch aus einem Füller und Wasserglas.

Baumaterialien im Sinne der Erfindung sind unten weiter beschrieben.

Die "Schichtstärke" im Sinne der Erfindung wird je nach Material und spezieller Verfahrensführung gezielt eingestellt. Sie kann über das Verfahren gleich bleiben oder im Verlauf des Verfahrens varliert werden. Die Schichtdicke liegt vorzugsweise im Bereich von 50 bis 500 µm, mehr bevorzugt bei 100 bis 400 µm und noch mehr bevorzugt bei 150 bis 300 µm. Die "Verfestigungsreaktion des Baumaterials" im Sinne der Erfindung hat beim Auftragen des Baumaterials bereits begonnen. Sie kann durch geeignete Maßnahmen beschleunigt werden, wie z.B. Temperieren des Bauraumes.

Ein "reaktionshemmendes" oder "reaktionsstoppendes Material" oder "Flussigkeit" im Sinne der Erfindung - auch als "Verzögerer" bezeichnet - sind alle Stoffe, die durch Aufbringen eine Verfestigung des Baumaterials verlangsamen, hemmen oder ganz stoppen können. Ein "Verzögerer" im Sinne der Erfindung ist eine Substanz die die Härtung beeinflusst und verlangsamt. Dazu zählen Basen, Säuren, Alkohole, hydrophobe Lösungen, Öle, Hydrochinon, oder Substanzen mit monofunktionellen Gruppen.

"Bindemittel" im Sinne der Erfindung können vorzugsweise ein Zement oder Gips, ein Acrylat oder Styrol, ein Polyurethan, ein Epoxidharz, ein Polyester oder/und ein Polyamid sein. Weitere Details hierzu sind weiter unten ausgeführt.

Ein "Aktivierungsschritt" im Sinne der Erfindung ist eine Verfahrensmaßnahme, die dazu führt, dass die Verfestigungsreaktion schneller oder/und vollständiger abläuft. Ein Aktivierungsschritt kann in einer bevorzugten Verfahrensführung auch das Überschreiten einer für die jeweilige Reaktion kritischen Schwelle bedeuten, die zum gesteuerten Starten der Verfestigungsreaktion führt.

Reaktionen im Sinne der Erfindung können - ohne darauf begrenzt zu sein - vorzugsweise eine Hydratation, eine Polymerisation oder eine Phasenübergangsreaktion sein.

Der erfindungsgemäße Mechanismus basiert zu einem Teil auf der "Verzögerung" oder Blockierung der Härtung. Hierbei ist eine Zeitspanne der Verzögerung gemeint, die es ermöglicht, das Bauteil sicher von Anhaftungen zu befreien. Die Zeitspanne bei aktivierbaren Materialien ist nahezu unendlich.

"Anhaftungen" sind außerhalb der geometrischen Grenze des Bauteils auftretende teilverfestigte Bereiche. Sie sind im Allgemeinen unerwünscht und sollen durch Bürsten, Abblasen oder Pulverstrahlen entfernt werden können.

"Außenraum" beschreibt die Fläche außerhalb der geometrischen Grenze des Bauteils. Hier wird erfindungsgemäß ein Verzögerer aufgebracht. Dies kann erfindungsgemäß auf der ganzen Fläche erfolgen oder nur an den Bauteilgrenzen oder außerhalb des Bauteils in jeder Schicht oder partiell.

"Schmelztemperatur" im Sinne der Erfindung bezieht sich auf eine Temperatur, die im Bauraum und schließlich in dem Baumaterial vorliegen muss, damit sich eine Verfestigung ergibt. Diese kann variieren und hängt von den jeweils eingesetzten Materialien ab.

In dem erfindungsgemäßen Verfahren wird das Partikelmaterial (Baumaterial) ausgewählt aus der Gruppe bestehend aus frisch angemischtem Beton oder Mörtel, einem Gemisch aus einem Füller und einem Reaktivharzsystem, einem Gemisch aus einem Gießereiformstoff und einem in der Gießerei üblichen Reaktivharzsystem, einem Gemisch aus einem Füller und Wasserglas.

Normalerweise wird das Baumaterial in dem Verfahren kurzzeitig vor dem Auftragen in einem dafür vorgesehenen Mittel innig vermischt, und eine Härtungsreaktion setzt dann selbstständig ein. Weitere Aktivierungsschritte oder Maßnahmen zur Verfestigung wie z.B. Sintern sind nicht mehr notwendig, um das gehärtete Bauteil zu erhalten.

Allerdings kann es vorteilhaft sein, um das Verfahren und den Bauprozess zum Herstellen der 3D-Formteile zu beschleunigen, zusätzlich einen Aktivierungsschritt durchzuführen. Dieser Aktivierungsschritt erfolgt vorzugsweise nach dem Auftragen aus dem Druckkopf.

Vorzugsweise erfolgt der zusätzliche Aktivierungsschritt durch Bestrahlen, mehr bevorzugt mittels IR-Strahlung.

Es kann aus verschiedenen Gründen vorteilhaft sein, wie z.B. zur Erlangung von vorteilhaften Materialeigenschaften in den 3D-Bauteilen, in dem erfindungsgemäßen Verfahren die Verfestigungsreaktion um Stunden, besonders bevorzugt um mehrere Tage, zu verzögern oder im Wesentlichen vollständig zu stoppen.

Der Verfestigungsreaktion können verschiedenen Mechanismen zu Grunde liegen, anhängig von den gewählten Baumaterialien. Dabei kann die Verfestigungsreaktion eine Hydratation, eine Polymerisation oder eine Phasenübergangsreaktion ist.

Es kann jedes geeignete Bindemittel verwendet werden, das mit den anderen Materialkomponenten und Vorrichtungsmitteln kompatibel ist. Vorzugsweise wird als Bindemittel ein Zement oder Gips, ein Acrylat oder Styrol, ein Polyurethan, ein Epoxidharz, ein Polyester oder/und ein Polyamid verwendet.

In einem weiteren Aspekt betrifft die Erfindung die Verwendung eines wie hier beschriebenen Materialsystems in einem hier beschriebenen 3D-Druckverfahren.

Weiterhin betrifft die Erfindung eine Vorrichtung zum Durchführen eines erfindungsgemäßen 3D-Druckverfahrens.

Der Fachmann wird verstehen, dass zur Durchführung des erfindungsgemäßen Verfahrens Vorkehrungen getroffen werden müssen, um ein störungsfreies Arbeiten beispielsweise des Druckkopfes zu gewährleisten. Hierzu kann der Druckkopf in verschiedenen Aspekten besonders ausgestaltet sein, wie eine Beschichtung mit Antihaftmitteln, um ein Verkleben des Druckkopfes zu verhindern. Hier kann z.B. eine Teflonbeschichtung des Druckkopfes vorgesehen werden.

Eine andere vorteilhafte Ausgestaltung der Druckvorrichtung kann darin bestehen, dass die Vorrichtung eine Reinigungsstation für den Druckkopf oder/und das Beschichtungsmittel (Beschichter, Recoater) beinhaltet. Der Druckkopf oder/und der Beschichter steuert diese Reinigungsstation vorzugsweise nach jedem Beschichten, mehrbevorzugt nach jedem zehnten Beschichten anoder wie erforderlich an und wird von Verunreinigungen der aufgetragenen Materialien (Baumaterial/Partikelmaterial, Materialmischung, reaktionshemmende oder reaktionsstoppende Flüssigkeit) befreit.

Der Beschichter wird dabei über seine ganze Länge an der Reinigungsstation von Verunreinigungen gesäubert.

In dem erfindungsgemäßen Verfahren befindet sich in dem Beschichter Baumaterial, das bereits die Fähigkeit zum Abbinden bzw. Verkleben oder Aushärten hat oder dessen Materialkomponenten eine Reaktion durchlaufen, die ein Verbinden der Partikelkomponenten erlauben.

Deshalb besteht eine Lösung, den Beschichter funktionstüchtig zu halten und vor Verunreinigungen oder einer Verstopfung durch sich verbindendes Material zu schützen darin, dass die Vorrichtung eine sogenannte Dump-Station aufweist, an die der Beschichter gefahren wird, während andere Verfahrensschritte durchgeführt werden oder es z.B. eine Beschichtungspause im Verfahrensablauf gibt. Diese Dump-Station ist so ausgestaltet, dass der Beschichter den Beschichtungsvorgang hier weiterführt und so gewährleistet wird, dass das Baumaterial kontinuierlich abgegeben wird und ein Verstopfen durch das Baumaterial vermieden wird. Sobald der Beschichtungsvorgang in dem Verfahren fortgesetzt werden soll, wird der Beschichter wieder zurück zu der Bauplattform gefahren, und der Aufbauprozess des 3D-Modells kann fortgeführt werden.

Weiterhin verwendet das erfindungsgemäße Verfahren Baumaterial, bei dem die Abbindereaktion/Verfestigungsreaktion bereits gestartet ist, wenn der Beschichter befüllt wird. Um das so genannte Totmaterial, d.h. Material, das letztendlich nicht im Aufbauprozess verwendet wird, möglichst gering zu halten, werden die Materialkomponenten mittels eines Mischmittels zeitlich gesehen kurz vor der Befüllung des Beschichters miteinander vermischt. Dies hat mehrere Vorteile. Durch die relativ geringen Mengen dieser Mischung wird eine innige Vermischung sowie eine gute Reaktion und damit Verfestigung in dem Baumaterial gewährleistet, was sich positiv auf die Materialeigenschaften des erzeugten 3D-Bauteiles auswirkt. Andererseits wird so das Totmaterial von zu verwerfendem Material möglichst gering gehalten und somit der Materialeinsatz gering gehalten.

Somit umfasst die Vorrichtung in einer bevorzugten Ausführungsform eine Reinigungsstation für den Beschichter und gegebenenfalls für den Drucckopf, eine Mischvorrichtung für das Baumaterial und vorzugsweise eine Dump-Station zur Abgabe von Totmaterial neben den üblichen konstruktiven Mitteln einer 3D-Druckvorrichtung.

In einem weiteren bevorzugten Aspekt, der nicht beansprucht wird, betrifft die Offenbarung somit eine Vorrichtung geeignet für 3D-Druckverfahren, umfassend eine verfahrbare Bauplattform, einen Beschichter zum Auftragen von Baumaterial, das ein selbstaushärtendes Materialgemisch ist, mindestens eine Druckkopfeinheit, mindestens eine Mischeinheit, mindestens eine Reinigungseinheit zur Reinigung des Beschichters, gegebenenfalls mindestens eine Reinigungseinheit zur Reinigung der Druckkopfeinheit und gegebenenfalls eine Aufnahmeeinheit zur Aufnahme von Baumaterial.

Die Aufnahmeeinheit dient vorzugsweise dazu, Totmaterial aufzunehmen, das nicht zum Aufbauprozess dient, während der Beschichter auf Grund von anderen durchzuführenden Arbeitsschritten in eine Warteposition verfahren werden muss. Durch die Abgabe von Baumaterial aus dem Beschichter in diese Aufnahmeeinheit wird vorteilhafter Weise gewährleistet, dass der Beschichter nicht verschmutzt wird, voll funktionsfähig bleibt und nach der Warteposition und Wartezeit die Beschichtung in präziser Art und Weise fortführen kann. Damit wird auch die Notwendigkeit einer Reinigung teilweise vermieden, oder die Reinigungszyklen werden vermindert. Dies wirkt sich positiv auf die Verfahrensgeschwfndigkeit aus und erhöht die Produktivität des Aufbauprozesses bei gleichbleibendem Qualitätsstandard.

### Kurze Beschreibung der Figuren:

Die Figuren beschreiben 3D-Drucker aus dem Stand der Technik sowie bevorzugte Ausführungsformen der Erfindung,

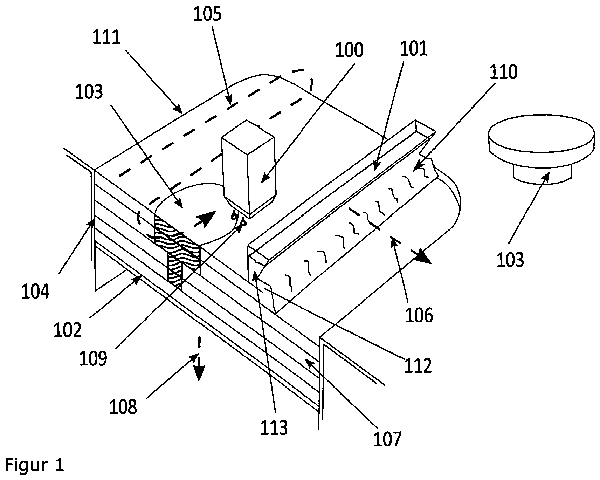

Figur 1: Schematische Darstellung der Komponenten eines pulverbasierten 3D-Druckers als geschnittener Schrägriss,
Figur 2: Ablauf eines konventionellen 3D-Druckprozesses mit Einsatz einer schichtweisen Strahlungshärtung.

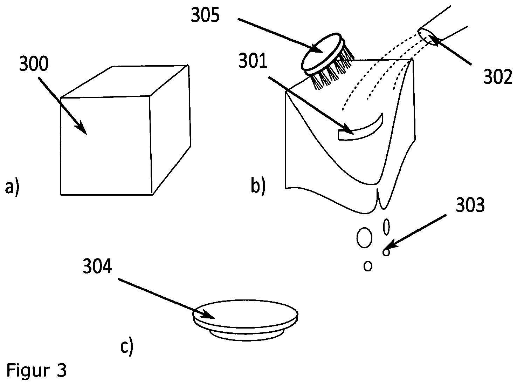

Figur 3: Schema des Entpackens von Bauteilen aus einem erfindungsgemäß verwendbaren reaktionsgehinderten Material.
Figur 4: Schema einer erfindungsgemäß verwendbaren gehinderten Phasenübergangsreaktion

### Reaktionsschemata:

Schema 1: Chemische Reaktion eines erfindungsgemäß verwendbaren reaktionsgehinderten Kaltharzverfahrens
Schema 2: Chemische Reaktion eines erfindungsgemäß verwendbaren reaktionsgehinderten Cold-Box-Verfahrens

### Bevorzugte Ausführungsformen der Erfindung:

Im ersten Schritt wird ein flüssiges oder pulverartiges Material (Baumaterial) mit einem Beschichter auf eine Bauplattform aufgetragen und geglättet. Dieses Material verfestigt selbst mit der Zeit. Das Material kann beispielsweise über Trocknen verfestigen. Ebenso ist eine chemische Reaktion denkbar, die langsam voranschreitet. Auch sind physikalische Prozesse wie ein Phasenübergang denkbar.

Über einen Tintenstrahldruckkopf (Druckkopf) wird dann vor oder nach einem optionalen Verfestigungsschritt eine flüssige oder sich in einer Flüssigkeit befindlichen Substanz aufgebracht, die den jeweiligen Verfestigungsmechanismus verlangsamt bzw. blockiert.

Ein Verfestigungsschritt kann z.B. eine Trocknung nach dem Druckvorgang sein.

Im Anschluss wir die Bauplattform um eine Schichtstärke abgesenkt.

Die oben genannten Schritte werden solange wiederholt, bis der gewünschte Körper erstellt Ist.

Zum Abschluss werden das das Bauteil umgebende Material und die Anhaftungen entfernt. Dies kann je nach Art des Mechanismus durch Bürsten, Strahlen oder Waschen erfolgen.

Die Vorteile dieses Verfahrens liegen darin, dass die Verlangsamung oder Blockierung des Verresligungsmechanismus meist durch eine sehr geringe Menge eines Störmediums erreicht werden kann. Dieses Medium ist meist leichter dosierbar als die verfestigenden Materialien.

Zum Zweiten können auf diese Weise innige Mischungen erzielt werden. Dabei kann das Material intensiv mit den gewohnten Mischwerkzeugen zubereitet werden. Hierbei können starke Mischenergien verwendet werden. Der dritte Aspekt betrifft das Einbringen von Armierungen in das Bauteil. Durch die Vormischung sind wesentlich komplexere Materialien als Schicht verarbeitbar, als mit Verfahren des Standes der Technik.

Ebenso wird die Verdichtung des Grundmaterials beeinflusst. Es können Methoden zur flüssigen Ausbringung von Pulvermaterialien verwendet werden, die vorteilhafter Weise eine effiziente Partiketpackung ermöglichen.

Zusammenfassend haben die Erfinder eine Möglichkeit entwickelt, in vorteilhafter Weise den Einsatz von bisher nicht im 3D-Druck einsetzbarer Materialien für 3D-Druckverfahren zugänglich zu machen. So kann z.B. ein herkömmlicher Beton verarbeitet werden. Im Ergebnis liegt ein Bauteil vor, das einer gegossenen Qualität in Nichts nachsteht. Ebenso kann zum Beispiel ein Kunststoffbauteil aus hochviskosen Reaktivharzen erstellt werden. Damit gehen für additiv erzeugte Bauteile hervorragende Festigkeiten einher.

Weitere bevorzugte Ausführungsformen der Erfindung:
Das System ist eng an den pulverbasierten 3D-Druck angelehnt. Die Maschinentechnik wird gemäß der erfindungsgemäßen Anforderungen erweitert.

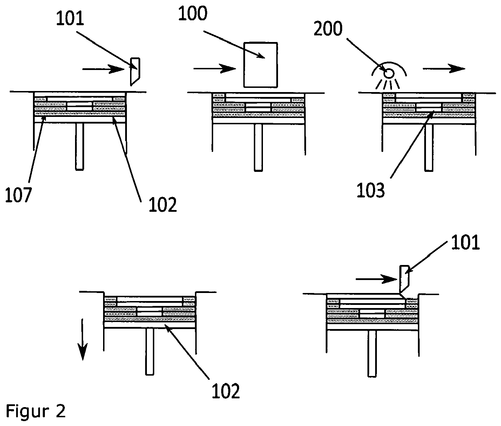

Die Vorrichtung weist einen Beschichter (2) auf. Mit diesem wird vorgemischtes Partikelmaterial oder eine Partikelmaterial enthaltende Flüssigkeit auf eine Bauplattform (3) aufgebracht und geglättet (Figur 2(a)). Das aufgebrachte Partikelmaterial kann aus verschiedensten Materialien bestehen. Beispielsweise können Sande, Keramikpulver, Metallpulver, Kunststoff, Holzpartikel, Faserwerkstoff, Cellulosen, Lactosepulver usw. verwendet werden. Die Fließeigenschaften dieser Materialien können stark unterschiedlich ausfallen. Verschiedene Beschichtertechniken lassen die Schichtbildung von trockenen, frei fließenden Pulvern über kohäsive schnittfeste Pulver bis hin zu flüssigkeitsbasierten Dispersionen zu. Die Höhe der Pulverschichten (4) wird durch die Bauplattform (3) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Erfindungsgemäß beginnt der Verfestigungsprozess des aufgebrachten Baumaterials bereits vor dem Aufbringen, da alle für die Reaktion benötigten Komponenten zeitnah in einem Mischmittel innig vermischt worden sind. Das Baumaterial wird also vor dem Auftrag in einem Aufbereitungsmittel hergestellt und schnell dem Beschichter zugeführt. Hierbei werden die Transportzeitspannen und Durchflüsse überwacht. In einem Fehlerfall wird das Material nicht der Anlage zugeführt und die Anlage mit neutralem Material gespült. Das neutrale Material kann z.B. eine passive Komponente des Baumaterials umfassen.

Konstruktiv ist die Materialzuführung ohne jegliche Toträume ausgeführt. D.h. dass die Materialströmung immer laminar alle in der Zuführung befindlichen Materialmengen mitfördert.

Nach einem Beschichtungsprozess wird die Schicht mittels eines Tintenstrahldruckkopfes (1) mit einer Flüssigkeit - dem sogenannten Verzögerer - bedruckt (Figur 2(b)). Das Druckbild entspricht dem invertierten Schnitt durch das Bauteil in der aktuellen Bauhöhe der Vorrichtung. Die Flüssigkeit trifft auf das Partikelmaterial und diffundiert langsam hinein.

Während oder kurz nach dem Drucken des Verzögerers verfestigt die Schicht nach dem erfindungsgemäßen Verfahren (Figur 2(c)). Um dies zu beschleunigen kann zusätzlich in einer bevorzugten Ausführungsform beispielsweise ein IR-Strahler (5) über das Baufeld geführt werden. Dieser kann mit der Achse des Beschichtungssystems gekoppelt sein. Während des Heizens verdampft das Lösemittel. Bei feuergefährlichen Flüssigkeiten wird das verdampfende Material sofort abgesaugt (7).

Dieses Verfahren kann dazu dienen, die in Verfestigungsreaktion in ihren Zeitverläufen zu beeinflussen und vorzugsweise zu beschleunigen. Damit kann der Zeitraum, bis die Teile entpackt werden können, verkürzt werden.

Generell wird bei dem erfindungsgemäßen Verfahren durch den Bauprozess ein Jobklotz (300) produziert, aus dem im Anschluss an den Bauprozess die eingebetteten Bauteile (301) befreit werden müssen. Dieser Vorgang kann z.B. mittels Spülung mit einer Flüssigkeit erfolgen (302,303). Ebenso oder zusätzlich kann das Freilegen des Bauteils durch manuelles Bürsten oder Pinseln erfolgen (305).

Im Folgenden werden kurze Beschreibungen zu bevorzugten Materialsystemen gegeben. Hierbei wird jeweils der Gesamtprozess kurz dargestellt.

### Zement-gebundener Werkstoff

Ein Zuschlagsstoff wie beispielsweise Sand wird mit einem Zementleim, Wasser und Zusätzen vermischt. Über einen Spezialbeschichter wird diese pastöse Substanz auf eine Bauplattform aufgetragen.

Als reaktionsbremsende Substanz wird eine säurehaltige Zuckerlösung auf die Bereiche aufgebracht, die nicht verfestigen sollen. Diese Kombination stört die Hydratisierung des Zementes und somit die Verfestigung.

Nach einer gewissen Abbindezeit kann der entstandene Jobklotz mit Hilfe von Wasser gelöst werden. Dabei wird das "verzögerte" Material unter der Einwirkung von Wasser abgebürstet. Die Waschlösung ist dabei umweltschonend, da sie nicht giftig-tst.

Das so erzeugte Bauteil ist von der Beschaffenheit und in seinen Festigkeitseigenschaften einem durch Gießen hergestellten Zementbauteil vergleichbar.

### Polvmersvnthese-Reaktion (Kaltharz)

Ein in seiner Reaktion verzögertes Kaltharzbindemittel für Metallgussanwendungen wird mit einem Härter und Sand als Charge vermischt und in den Beschichter gegeben. Dieser trägt das Baumaterial als Schicht auf. Gegenüber dem Stand der Technik kommt ein spezieller Beschichter zum Einsatz, der sehr kohäsive Sandmischungen verarbeiten kann.

Ein Tintenstrahldruckkopf druckt im dem Bereich, in dem später der Sand entfernt werden soll, eine basische Substanz auf. Dabei muss lediglich eine kleine Menge einer stark basisch wirkenden Substanz aufgetragen werden.

Das Baumaterial verfestigt in diesem Prozess ohne das Aufdrucken einer Substanz komplett. Es müssen spezielle Maßnahmen ergriffen werden, um Mischer, Beschichter und Baubehälter zu schützen.

Das Ergebnis dieses Prozesses ist eine poröse Form oder ein Kern mit Kaltharzbindung. Diese kann in bekannter Weise im Metallguss eingesetzt werden.

### Polvmersynthese-Reaktion (Polyurethan)

Ein mindestens difunktionelles präpolymeres Isocyanat wird mit einem mindestens difunktionellen Phenol enthaltenden Polyol und weiteren Zusätzen mit einem Gießereisand vermischt. Das Gemisch wird so eingestellt, dass die Polymerisationsreaktion mehrere zehn Minuten andauert bzw. nach mindestens dieser Verweildauer erst einsetzt.

Ein Tintenstrahldruckkopf druckt im dem Bereich, in dem später der Sand entfernt werden soll, eine Substanz auf, die zum einen monofunktionell ist und zum anderen viel schneller mit einer reaktiven Komponente abreagiert als mit dem multifunktionellen Reaktionspartner. Damit werden die für eine Polymerisation notwendigen reaktiven Gruppen reduziert. In diesem System ist z.B. ein Aufdrucken von Verbindungen der Formel R-OH oder R¹-NH-R² wirksam, wobei kurzkettige Alkohole wie Ethanol oder 2-Propanol hinsichtlich der entstehenden Reaktionsprodukte bevorzugt sind. Isocyanatgruppen werden mit diesen Stoffen wirksam und irreversibel inaktiviert.

Für das Auspacken wird der lose Sand abgebürstet und abgestrahlt.

Das Ergebnis ist eine Gussform für Metallgussanwendungen des in diesem Fachbereich bekannten Typs Cold-Box.

### Polymersynthese Reaktion (Polyacrylat)

Ein Basismaterial z.B. Blähglas oder ein Polymer wird mit radikalisch polymerisierbaren Acrylaten gemischt. Zudem wird dem System ein Photoinitiator zugegeben.

Ein Tintenstrahldruckkopf druckt in den Bereich, in dem später das Basismaterial entfernt werden soll, eine Substanz auf, die die weitere Kettenbildung stört bzw. den Photoinitiator inaktiviert. Dieses können bekannte Inhibitoren wie TEMPO oder Hydrochinon sein.

Nach dem Druckprozess erfolgt eine Belichtung mit einer UV-Lampe. Dabei entstehen in den bedruckten Bereichen durch den inaktivierten Photoinitiator entweder keine Radikale für die Polymerisation, oder nur so viele, wie von den zugegebenen Inhibitoren sofort abgefangen werden können.

Dadurch kann sich in den bedruckten Bereichen keine Festigkeit aufbauen. Das Ergebnis dieses Prozesses ist ein gefülltes Kunststoffbauteil, Dieses kann als Funktionsbauteil in technischen Anwendungen oder als Anschauungsobjekt dienen.

### Phasenwechsel (nicht nach der beanspruchten Erfindung)

Ein Basismaterial (600) z.B. Polystyrolpulver wird mit einem Wachs gemischt (601) und über dessen Schmelzpunkt erhitzt (Fig, 4 a). Im heißen Zustand wird es mit dem Beschichter auf die Bauplattform aufgebracht. Die Temperatur im Baubereich wird über dem Schmelzpunkt des Wachses gehalten.

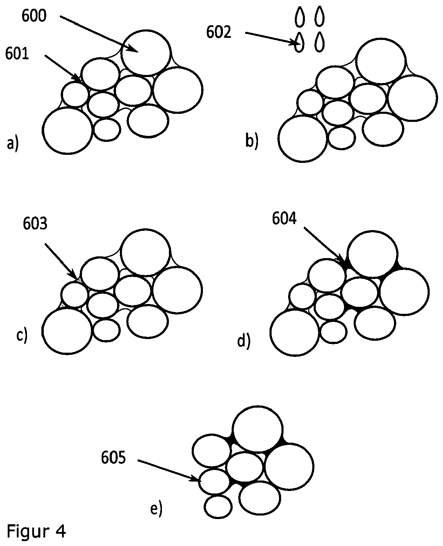

Diese Schicht wird mit Öltropfen (602) z.B. Paraffinöl bedruckt (Fig. 4 b). Dieses Öl ist mit dem heißen Wachs mischbar. Dieses Gemisch (603) befindet sich zwischen den Partikeln im Außenbereich.

Beim langsamen Auskühlen bildet sich im unbedruckten Bereich eine Festigkeit durch die erkalteten Partikelbrücken (604) aus. Im bedruckten Bereich stört das Öl die Bildung von Festigkeit. Die Partikel in diesem Bereich (außerhalb der Bauteilkontur 605) können anschließend leicht abgebürstet werden.

Das so erzeugte Bauteil kann als so genannter Wachsling für Feingussanwendungen verwendet werden.

Um die Trennung von gewünschtem Bauteil und umliegenden Material zu vereinfachen, bietet es sich aus Materialökonomie an, den Verzögerer nur linienförmig entlang der Außenkontur des jeweiligen Schichtquerschnittes aufzudrucken und die außerhalb der Bauteilkontur liegenden Bereiche mit einem Gitter zu bedrucken. Fügt man nun in bestimmter Folge vollflächige Trennebenen ein, entsteht eine Würfelstruktur um das Bauteil herum, die sich einfach auch aus komplexen Geometrieabschnitten entfernen lässt. Die Größe der Würfelgeometrie lässt sich entweder standardmäßig einstellen, oder passt sich über entsprechende Algorithmen automatisch der Bauteilkontur an.

Im Weiteren sind einige Reaktionsschemata zu den erfindungsgemäßen Materialsystemen dargestellt:
Reaktionsschema 1 (chemische Reaktion Kaltharz/ Reaktionsstop):

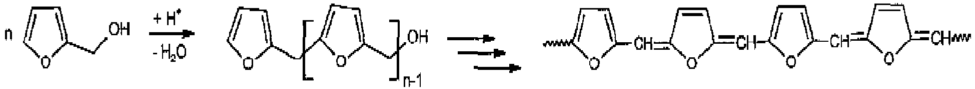

### Reaktion von Furfurylalkohol unter Kondensation unter sauren Bedingungen; pH-Wert Erhöhung bedingt ein Ausbleiben der Reaktion

### Reaktionsschema 2 (chemische Reaktion ColdBox):

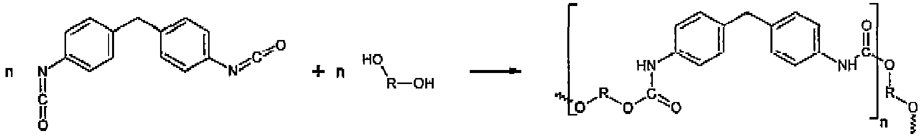

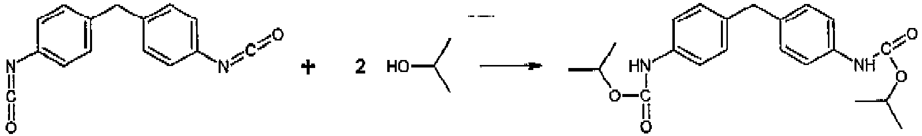

Unterbinden der Polymerisation durch Konkurrenzreaktion des Isocyanats mit 2-Propanol

### Bezugszeichenliste

- 100: Tintenstrahldruckkopf
- 101: Pulverbeschichter
- 102: Bauplattform
- 103: Bauteil
- 104: Baufeldberandung
- 107: Pulverschichten
- 200: Verfestigungseinheit
- 300: Jobklotz
- 301: Eingebettetes Bauteil
- 302: Spüldüse
- 303: Abtropfendes Material des Außenbereiches
- 304: Freigelegtes Bauteil
- 305: Bürste
- 600: Basispartikel
- 601: Flüssiges Wachs
- 602: Öltropfen
- 603: Brücke aus Wachs/Öl
- 604: Verfestigtes Wachs
- 605: Bauteilkontur

## Patentansprüche

1. Verfahren zum Herstellen dreidimensionaler Modelle mittels Schichtaufbautechnik, wobei partikelförmiges Baumaterial in einer definierten Schichtstärke als Pulver oder als Dispersion auf ein Baufeld aufgetragen wird, anschließend über einen Druckkopf (100) eine Flüssigkeit selektiv auf das Baumaterial in den Bereichen aufgebracht wird, in denen das Baumaterial nicht durch eine Verfestigungsreaktion verfestigen soll, das Baufeld um die Schichtstärke verfahren wird, vorzugsweise abgesenkt, angehoben oder horizontal verfahren wird, und diese Schritte wiederholt werden bis das gewünschte Modell erzeugt ist, und eine reaktionshemmende oder reaktionsstoppende Flüssigkeit durch den Druckkopf (100) selektiv aufgetragen wird, wobei das Baumaterial ein Baumaterial umfasst ausgewählt aus der Gruppe bestehend aus Sanden, Keramikpulver, Metallpulver, Kunststoffe, Holzpartikel, Faserwerkstoffe, Cellulosen oder/und Lactosepulver oder wobei das Baumaterial ausgewählt wird aus der Gruppe bestehend aus frisch angemischtem Beton oder Mörtel, einem Gemisch aus einem Füller und einem Reaktivharzsystem, einem Gemisch aus einem Gießereiformstoff und einem in der Gießerei üblichen Reaktivharzsystem, einem Gemisch aus einem Füller und Wasserglas, das Verfahren ist **dadurch gekennzeichnet, dass** das Baumaterial ein selbstaushärtendes Materialgemisch ist, das selbst mit der Zeit verfestigt und wobei die Verfestigungsreaktion des Baumaterials beim Auftragen des Baumaterials bereits gestartet ist oder startet.

2. Verfahren nach Anspruch 1, **dadurch gekennzeichnet, dass** ein zusätzlicher Aktivierungsschritt nach dem Auftragen aus dem Druckkopf (100) erfolgt.

3. Verfahren nach Anspruch 2, **dadurch gekennzeichnet, dass** der zusätzliche Aktivierungsschritt durch Bestrahlen, vorzugsweise mit Infrarotstrahlung, erfolgt.

4. Verfahren nach Anspruch 1, 2 oder 3, **dadurch gekennzeichnet, dass** die Verfestigungsreaktion um Stunden, besonders bevorzugt um mehrere Tage, verzögert wird oder im Wesentlichen vollständig gestoppt wird.

5. Verfahren nach einem der Ansprüche 1 - 4, **dadurch gekennzeichnet, dass** die Verfestigungsreaktion eine Hydratation, eine Polymerisation oder eine Phasenübergangsreaktion ist.

6. Verfahren nach einem der Ansprüche 1 - 5, **dadurch gekennzeichnet, dass** als Bindemittel ein Zement oder Gips, ein Acrylat oder Styrol, ein Polyurethan, ein Epoxidharz, ein Polyester oder/und ein Polyamid verwendet wird.

## Claims

1. A method for producing three-dimensional models by means of a layer construction technique, wherein particulate construction material is applied in a defined layer thickness as a powder or as a dispersion onto a construction field, a liquid is then selectively applied to the construction material via a print head (100) in the regions in which the construction material is not to solidify by a solidification reaction, the construction field is moved by said layer thickness, preferably lowered, raised or moved horizontally, and these steps are repeated until the desired model is produced,
and a reaction-inhibiting or reaction-stopping liquid is selectively applied through the print head (100), wherein the construction material comprises a construction material selected from the group consisting of sands, ceramic powders, metal powders, plastics, wood particles, fibrous materials, celluloses or/and lactose powders, or wherein the construction material is selected from the group consisting of freshly mixed concrete or mortar, a mixture of a filler and a reactive resin system, a mixture of a foundry moulding material and a reactive resin system customary in the foundry, a mixture of a filler and water glass,
the method being **characterized in that** the construction material is a self-hardening material mixture which solidifies itself over time and wherein the solidification reaction of the construction material has already started or starts when the construction material is applied.

2. The method according to claim 1, **characterized in that** an additional activation step takes place after application from the print head (100).

3. The method according to claim 2, **characterized in that** the additional activation step is carried out by irradiation, preferably with infrared radiation.

4. The method according to claim 1, 2 or 3, **characterized in that** the solidification reaction is delayed by hours, particularly preferably by several days, or is substantially stopped completely.

5. The method according to any one of claims 1 to 4, **characterized in that** the solidification reaction is a hydration, a polymerisation or a phase transition reaction.

6. The method according to any one of claims 1 to 5, **characterized in that** a cement or gypsum, an acrylate or styrene, a polyurethane, an epoxy resin, a polyester or/and a polyamide is used as binder.

## Revendications

1. Procédé de fabrication de modèles tridimensionnels au moyen d'une technique de construction couche par couche, dans lequel un matériau de construction en particules est appliqué en une épaisseur de couche définie sous forme de poudre ou de dispersion sur un champ de construction, un liquide est ensuite appliqué sélectivement par l'intermédiaire d'une tête d'impression (100) sur le matériau de construction dans les zones dans lesquelles le matériau de construction ne doit pas se solidifier par une réaction de solidification, le champ de construction est déplacé de l'épaisseur de couche, de préférence abaissé, soulevé ou déplacé horizontalement, et ces étapes sont répétées jusqu'à ce que le modèle souhaité soit produit,
et un liquide inhibant ou arrêtant la réaction est appliqué sélectivement par la tête d'impression (100), le matériau de construction comprenant un matériau de construction choisi dans le groupe constitué de sables, de poudre de céramique, de poudre de métal, de matières plastiques, de particules de bois, de matériaux fibreux, celluloses ou/et de la poudre de lactose, ou dans lequel le matériau de construction est choisi dans le groupe constitué par du béton ou du mortier fraîchement mélangé, un mélange d'une charge et d'un système de résine réactive, un mélange d'un matériau de moulage de fonderie et d'un système de résine réactive usuel dans la fonderie, un mélange d'une charge et de verre soluble,
le procédé étant **caractérisé en ce que** le matériau de construction est un mélange de matériaux auto-durcissant qui se solidifie lui-même avec le temps et dans lequel la réaction de solidification du matériau de construction est déjà démarrée ou démarre lors de l'application du matériau de construction.

2. Procédé selon la revendication 1, **caractérisé en ce qu'**une étape d'activation supplémentaire est effectuée après l'application à partir de la tête d'impression (100).

3. Procédé selon la revendication 2, **caractérisé en ce que** l'étape d'activation supplémentaire est réalisée par irradiation, de préférence par rayonnement infrarouge.

4. Procédé selon la revendication 1, 2 ou 3, **caractérisé en ce que** la réaction de solidification est retardée de plusieurs heures, de préférence de plusieurs jours, ou est sensiblement complètement arrêtée.

5. Procédé selon l'une quelconque des revendications 1 à 4, **caractérisé en ce que** la réaction de solidification est une hydratation, une polymérisation ou une réaction de transition de phase.

6. Procédé selon l'une quelconque des revendications 1 à 5, **caractérisé en ce que** l'on utilise comme liant un ciment ou du plâtre, un acrylate ou du styrène, un polyuréthane, une résine époxy, un polyester ou/et un polyamide.
